# EUROPÄISCHE PATENTSCHRIFT

(11) **EP 0 447 934 B1**
(45) Veröffentlichungstag und Bekanntmachung des Hinweises auf die Patenterteilung: **22.11.1995**
(21) Anmeldenummer: 91103813.1
(22) Anmeldetag: 13.03.1991
(51) Int. Cl.: H04M 3/42, H04M 3/22, H04M 1/00, H04Q 3/62, H04M 1/72

(54) **Verfahren zur Eingabe von vermittlungstechnischen Kunden- und Betriebsdaten in Kommunikationsvermittlungsanlagen und/oder programmierbare Kommunikations-Endgeräte**
Method for entering switching related customer and operational data into communication exchanges and/or programmable communication terminals
Procédé pour l'introduction de données techniques de commutation relatives à l'exploitation et aux abonnés dans des centraux de commutation et/ou dans des terminaux de communication programmables

(30) Priorität: 21.03.1990 DE 4009074
(43) Veröffentlichungstag der Anmeldung: 25.09.1991
(73) Patentinhaber: TELENORMA GMBH, 60326 Frankfurt am Main (DE)
(72) Erfinder: Memmo, Carlo, W-6100 Darmstadt 23 (DE)

(56) Entgegenhaltungen:
- DE-A- 2 832 374
- DE-A- 3 814 728
- US-A- 4 456 925
- TELENORMA NACHRICHTEN Nr. 83, 1981, FRANKFURT Seiten 23 - 27; HUTT ET AL:'TELESERVICE FUR TN-FERNSPRECH-NEB ENSTELLENANLAGEN-FERNPROGRAMMIERUNG'
- PATENT ABSTRACTS OF JAPAN vol. 10, no. 145 (E-407)(2202) 28. Mai 1986;& JP-A-61006937

## Beschreibung

Die Erfindung betrifft ein Verfahren zur Eingabe von vermittlungstechnischen Kunden- und Betriebsdaten in Kommunikations-Vermittlungsanlagen und /oder programmierbare Kommunikations-Endgeräte nach dem Oberbegriff des Patentanspruchs 1 - siehe hierzu auch DE-A-3 814 728.

In den TN-Nachrichten 1981, Heft 83 ist ab Seite 23 ein Aufsatz abgedruckt mit dem Titel: "Teleservice für TN-Fernsprech-Nebenstellenanlagen - Fernprogrammierung". Dort ist auf Seite 23, rechte Spalte angegeben wie Leistungsmerkmale realisiert werden in Fernsprech-Nebenstellenanlagen. Außerdem ist beschrieben, was unter benutzerspezifischen Daten zu verstehen ist. Diese benutzerspezifischen Daten werden meist als Kundendaten bezeichnet, weil damit eine Vermittlungsanlage auf die speziellen Erfordernisse und Wünsche eines Betreibers eingestellt wird. Die zur Realisierung von Leistungsmerkmalen erforderlichen Daten gehören zu den Betriebsdaten, welche im Speicher einer programmgesteuerten Vermittlungsanlage eingelesen werden müssen, damit die betreffende Vermittlungsanlage ihre Funktionen ausführen kann. Auf den Seiten 24 und 25 ist in Abbildungen dargestellt, welche Geräte zur Dateneingabe benutzt werden können und wie diese angeschlossen werden. In der Vermittlungsanlage sind hierfür besondere Schnittstellen vorgesehen, woran über Kabel spezielle Eingabegeräte angeschlossen werden müssen, wenn die vorbeschriebenen Daten erstmalig eingegeben werden, oder wenn Änderungen erforderlich sind. Wenn dazu der Abfrageapparat benutzt wird, so steht er nicht für normale Bedienungsvorgänge zur Verfügung. Bei einem derartigen Eingabeverfahren für vermittlungstechnische Daten ist es in den meisten Fällen erforderlich, daß eine an den jeweiligen Typ von Vermittlungsanlage angepaßte Bedienungsprozedur ausgeführt wird.

Ein Verfahren für die Bedienung einer mit einem Fernsprechanschluß verbundenen Freisprecheinrichtung ist aus der DE-A 28 32 374 bekannt. Bei diesem Verfahren handelt es sich lediglich darum, daß die zu einer Freisprecheinrichtung nötigen Bedienungsprozeduren nicht am Gerät selbst ausgeführt werden müssen, sondern über eine Fernbedienung steuerbar sind. Eine Eingabe von vermittlungstechnischen Betriebsdaten und Kundendaten ist mit einer derartigen einfachen Fernbedienungseinrichtung nicht möglich.

Aus der DE-A 38 21 572 ist eine Fernbedienungsanordnung zur Fernbedienung mehrerer gleichartiger fernbedienbarer elektrischer Geräte bekannt. Die dort beschriebene Fernbedienungsanordnung sieht vor, daß mit einem Adressensignalgeber des Fernbedienungsgerätes ausgewählt werden kann, welches fernbedienbare elektrische Gerät die drahtlos ausgesendeten Befehle ausführen soll. Die drahtlos auszusendenden Signale werden dabei von allen in dem betreffenden Raum befindlichen fernbedienbaren elektrischen Geräten empfangen, wobei jeweils die Adressen ausgewertet werden. Steuerbefehle werden nur von demjenigen fernbedienbaren elektrischen Gerät ausgeführt, welches seine eigene Adresse erkennt. Mit dieser Fernbedienungsanordnung soll verhindert werden, daß ein Gerät fälschlicherweise durch die Bedienung eines anderen Gerätes beeinflußt wird. Es soll also vermieden werden, daß bei der Fernbedienung eines Gerätes ein weiteres Gerät ungewollt Funktionen ausführt, welche nur das erste Gerät ausführen soll. Dies kann insbesondere dann vorkommen, wenn in einem Raum befindliche Geräte die gleichen Leistungsmerkmale aufweisen. Bei dieser Fernbedienungsanordnung ist nur ein gerichteter Betrieb möglich, wie dies im allgemeinen bei drahtlos bedienbaren Geräten der Unterhaltungselektronik üblich ist. Eine derartige Anordnung ist nicht dazu geeignet, Betriebsdaten und Kundendaten in eine Vermittlungsanlage einzugeben.

Die Aufgabe der Erfindung besteht darin, ein Verfahren zur Eingabe von vermittlungstechnischen Kunden- und Betriebsdaten in Kommunikations-Vermittlungsanlagen und/oder programmierbare Kommunikations-Endgeräte anzugeben, womit die dabei notwendigen Bedienungs- und Vorbereitungsprozeduren vereinfacht und verkürzt werden. Die Vorleistungen und der Platzbedarf für Anschlußkabel und Anschlußstecker für derartige Eingaben sollen vermieden werden, und es sollen einheitliche Eingabebedingungen für alle Arten von Vermittlungsanlagen und Endgeräte geschaffen werden.

Zur Lösung dieser Aufgabe ist eine Merkmalskombination vorgesehen, wie sie im Patentanspruch 1 angegeben ist.

Damit wird in vorteilhafter Weise erreicht, daß mit einem einzigen einheitlich gestalteten Fernbedienungsgerät und einheitlichen Bedienungsprozeduren bei vielen Arten von Kommunikations-Vermittlungsanlagen und/oder programmierbaren Kommunikations-Endgeräten ohne Vorbereitungen die Eingabe von Kunden- und Betriebsdaten ermöglicht wird. Dabei ist es nicht erforderlich, daß während der Eingabeprozedur die Kommunikations-Vermittlungsanlage oder das programmierbare Kommunikations-Endgerät außer Betrieb genommen werden muß.

In den Unteransprüchen sind vorteilhafte Weiterbildungen der Erfindung angegeben.

Ein Ausführungsbeispiel der Erfindung wird nachfolgend anhand von Zeichnungen näher erläutert. Es zeigt:
- Fig. 1: das Prinzipschaltbild der Zusammenarbeit zwischen Fernbedienungsgerät und Vermittlungsanlage, bzw. Endgerät,
- Fig. 2: das Prinzip für eine Dateneingabe zu einer Vermittlungsanlage über ein daran angeschlossenes Endgerät oder einen Vermittlungsplatz.

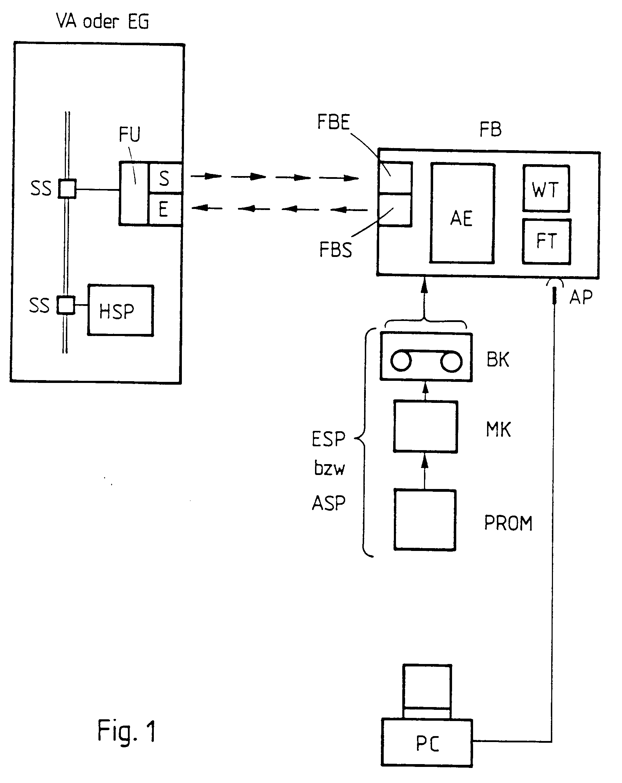

In der Fig. 1 ist dargestellt, wie ein Fernbedienungsgerät FB mit einer Vermittlungsanlage VA oder einem Endgerät EG zusammenarbeitet, wenn vermittlungstechnische Kunden- und Betriebsdaten eingegeben werden. Das Fernbedienungsgerät FB hat zu diesem Zweck einen Sender FBS, welcher drahtlos auf einen Empfänger E arbeitet, der sich in der Vermittlungsanlage VA oder dem Endgerät EG befindet. Außerdem sind in dem Fernbedienungsgerät FB eine Anzeigeeinrichtung AE, eine Wähltastatur WT und mehrere Funktionstasten FT vorgesehen. Diese Ausstattung der Fernbedienungseinrichtung FB genügt für die Eingabe von wenigen Daten, wenn beispielsweise die Betriebsmerkmale von einzelnen Anschlußorganen zu ändern sind.

Wenn die Betriebsmerkmale eines einzelnen Anschußorgans, z. B. A01 einer Vermittlungsanlage VA geändert werden soll, so wird das Fernbedienungsgerät FB auf das Gehäuse der betreffenden Vermittlungsanlage VA gerichtet, um die betreffenden Daten eingeben zu können. Damit eine derartige Bedienungsprozedur nicht von Unbefugten ausgeführt werden kann, ist es zweckmäßig, für eine Vermittlungsanlage VA oder ein Endgerät EG jeweils eine geheime Codenummer festzulegen. Diese Codenummer wird mit der Wähltastatur WT eingegeben, worauf die Vermittlungsanlage VA oder das Endgerät EG über einen dort vorgesehenen Sender S ein Startsignal abgeben kann, welches in einem Empfänger FBE des Fernbedienungsgerätes FB empfangen wird. Dieses Startsignal kann dann in der Anzeigeeinrichtung AE erscheinen.

Wenn es sich um die Änderung der Betriebsmerkmale eines Anschlußorgans A01 handelt, so muß zunächst dessen Rufnummer über die Wähltastatur WT eingegeben werden. Sodann genügt das Betätigen einer der Funktionstasten FT, um ein dieser Taste zugeordnetes Merkmal zu aktivieren. Zu diesem Zweck sind den einzelnen Funktionstasten jeweils Piktogramme zugeordnet, wie sie beispielsweise in DIN 40 100, Teil 22 als graphische Symbole für Leistungsmerkmale an Telefonapparaten festgelegt sind. Nach Beendigung dieser Prozedur sendet die Vermittlungsanlage VA über ihren Sender S ein Quittungssignal ab, wenn die betreffenden Daten vollständig aufgenommen worden sind. Dieses Quittungssignal wird vom Empfänger FBE der Fernbedienungseinrichtung FB empfangen und in der Anzeigeeinrichtung AE dargestellt. Das Quittungssignal kann selbstverständlich auch von einem Endgerät EG zurückgesendet werden, wenn dort eine Dateneingabe vorgenommen worden ist.

Die in einer Vermittlungsanlage VA oder in einem Endgerät EG drahtlos vom Fernbedienungsgerät FB empfangenen vermittlungstechnischen Daten werden in einem Formatumsetzer FU zwischengespeichert und gelangen über eine Systemschnittstelle SS in einen Speicher HSP, welcher innerhalb der Vermittlungsanlage VA oder in dem betreffenden Endgerät EG für die Aufnahme solcher Daten vorgesehen ist. Im Formatumsetzer FU werden die nach einem einheitlichen Übertragungsprotokoll ankommenden Daten jeweils so umgesetzt, daß sie für die betreffende Vermittlungsanlage VA oder das Endgerät EG verarbeitet werden können.

Für den Fall, daß größere Datenmengen für eine mittlere oder größere Vermittlungsanlage VA oder für ein Multifunktions-Endgerät EG einzugeben sind, ist in der Fernbedienungseinrichtung FB eine Lesevorrichtung angeordnet, welche auf einem Eingabe-Speichermedium ESP befindliche Daten lesen kann, welche dann über den Sender FBS des Fernbedienungsgerätes zum Empfänger E der Vermittlungsanlage VA oder des Endgerätes EG gelangen. Als Eingabe-Speichermedium kann je nach Ausführung der Fernbedienungseinrichtung FB entweder eine Bandkassette BK, eine Magnetkarte MK oder ein programmierbarer Festwertspeicher verwendet werden. Auf den für eine Vermittlungsanlage vorbereiteten Speichermedium befindet sich dann auch die für diese Vermittlungsanlage zuständige geheime Codenummer. Bei Verwendung eines Eingabe-Speichermediums ESP mit großer Kapazität, beispielsweise einer Bandkassette BK ist es auch möglich, die Daten mehrerer Vermittlungsanlagen VA oder mehrerer Endgeräte EG zu speichern. Die Bedienungsprozedur für das Eingeben von vermittlungstechnischen Daten wird dadurch noch weiter vereinfacht, weil es genügt, lediglich eine Starttaste zu betätigen, und die Anzeigeeinrichtung AE zu beobachten.

Nach Beendigung einer Eingabeprozedur oder auch zu jedem anderen beliebigen Zeitpunkt ist es über das Fernbedienungsgerät FB möglich, die Kunden- und Betriebsdaten einer Kommunikations-Vermittlungsanlage VA oder eines Endgerätes EG abzufragen. In diesem Fall ist eine für diese Betriebsart zuständige Funktionstaste zu betätigen, wodurch über den Sender FBS des Fernbedienungsgerätes FB ein entsprechender Befehl an die Vermittlungsanlage VA oder das Endgerät EG abgesendet wird. Daraufhin wird der entsprechende Speicher HSP ausgelesen und die Daten gelangen über den Formatumsetzer FU zum Sender S der Vermittlungsanlage VA oder des Endgerätes EG, von wo aus sie drahtlos zum Fernbedienungsgerät FB gelangen. Die Daten können dann auf der Anzeigeeinrichtung AE angezeigt werden. Sollte die Kapazität der Anzeigeeinrichtung AE nicht groß genug sein, so kann über einen besonderen Anschluß AP ein Personalcomputer PC angeschlossen werden, welcher diese Daten dann aufnimmt und auf einem Bildschirm anzeigt oder über einen Drucker ausdrucken kann. Wenn die Fernbedienungseinrichtung FB noch zusätzlich über eine Schreibeinrichtung verfügt, welche der Leseeinrichtung zugeordnet ist, so können Ausgabe-Speichermedien ASP genutzt werden, um die vermittlungstechnischen Daten zu speichern. Dabei ist es sinnvoll, als Ausgabe-Speichermedium ASP die gleiche Art zu benutzen wie sie auch als Eingabe-Speichermedium genutzt wird. Diese Art der Abfrage von vermittlungstechnischen Daten kann dazu benutzt werden, um den jeweils aktuellen Zustand einer Vermittlungsanlage VA oder eines Endgerätes EG zu kontrollieren und zu dokumentieren. Der an das Fernbedienungsgerät FB anschließbare Personalcomputer PC kann auch dazu dienen, Daten zu generieren, welche nicht über das Fernbedienungsgerät FB eingegeben werden können, weil dort nicht beliebig viele Funktionstasten FT unterzubringen sind.

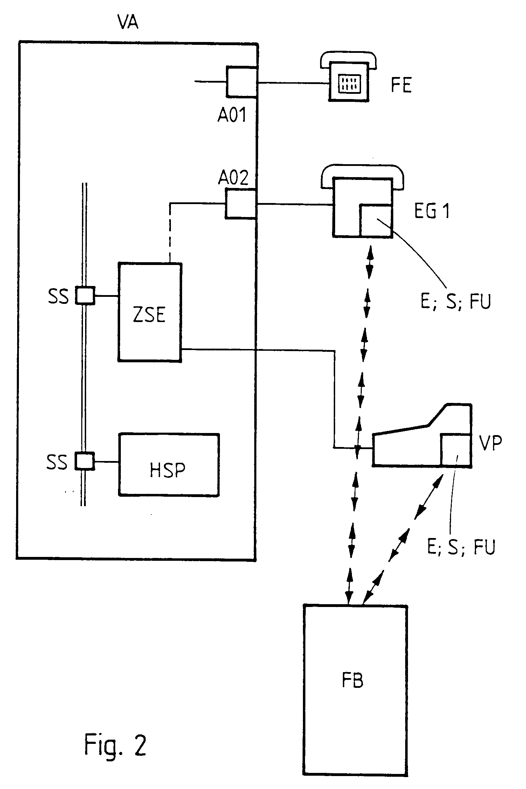

In der Fig. 2 ist dargestellt, wie in eine Vermittlungsanlage VA Kunden- und Betriebsdaten auch indirekt eingegeben werden können, indem ein Endgerät EG1 oder ein Vermittlungsplatz VP benutzt wird, wo die für die Zusammenarbeit mit dem Fernbedienungsgerät FB notwendigen Empfänger und Sender angeordnet sind. Hierzu gehört jeweils ein auf die betreffende Vermittlungsanlage VA abgestimmter Formatumsetzer FU. Wenn die Daten über ein Endgerät EG1 eingegeben werden, welches über ein Anschlußorgan AO mit der Vermittlungsanlage VA verbunden ist, so wird bei dieser Prozedur automatisch eine Verbindung zur zentralen Steuereinrichtung ZE der Vermittlungsanlage VA aufgebaut, damit die Daten in den dafür vorgesehenen Speicher HSP gelangen können.

Wenn der Vermittlungsplatz VP einer Vermittlungsanlage VA für diese Art von Dateneingabe benutzt wird, so erübrigt es sich in den meisten Fällen eine Verbindung zur zentralen Steuereinrichtung ZSE aufzubauen, weil bereits eine Direktverbindung dorthin besteht. Dabei ist es nicht notwendig, den Vermittlungsplatz VP von der normalen Betriebsart abzuschalten und für die Dateneingabe bereit zu halten. Der Betrieb kann vielmehr ungehindert weitergehen, wenn das Programm der Vermittlungsanlage VA in der Lage ist, trotz einer Eingabeprozedur die Betriebsprogramme weiter zu bearbeiten. Eine Eingabe von vermittlungstechnischen Kunden- und Betriebsdaten in Kommunikations-Vermittlungsanlagen VA über ein Endgerät EG1 oder einen Vermittlungsplatz VP kann sich als zweckmäßig erweisen, wenn die Vermittlungsanlage VA selbst in einem schwer zugänglichen Raum untergebracht ist, oder wenn das Fernbedienungsgerät FB aus anderen Gründen an der Vermittlungsanlage selbst nicht optimal eingesetzt werden kann.

Das Fernbedienungsgerät FB ist so ausgeführt, daß mit einheitlichen Bedienungsprozeduren eine große Typenvielfalt von Vermittlungsanlagen VA und/oder programmierbaren Kommunikations-Endgeräten EG damit bedient werden kann. Die mit dem Fernbedienungsgerät FB direkt zusammenarbeitenden Empfangs- und Sendeeinrichtungen E, S sind mit einem Formatumsetzer FU gekoppelt, wo ein Übergang zwischen den einheitlichen, systemunabhängigen Sende- und Empfangsdaten und den in einer Vermittlungsanlage VA oder in einem Endgerät EG benötigten Formen von Daten stattfindet. Diese Formatumsetzer können entweder als Kundenschaltkreis oder als Mikrocomputer ausgeführt sein.

## Patentansprüche

1. Verfahren zur Eingabe von vermittlungstechnischen Kunden- und Betriebsdaten in Kommunikations-Vermittlungsanlagen (VA) und/oder programmierbare Kommunikations-Endgeräte (EG), die mit gespeicherten Programmen gesteuert werden, wobei zur Inbetriebnahme, sowie zur Aktivierung von Funktionsmerkmalen und zum Einrichten von Berechtigungen besondere Speicher (HSP) vorgesehen sind, welche die dafür notwendigen Daten aufnehmen,daß zur Eingabe der für den Betrieb einer Kommunikations-Vermittlungsanlage (VA) oder eines Kommunikations-Endgerätes (EG) notwendigen Daten ein einheitlich gestaltetes Fernbedienungsgerät (FB) benutzt wird, welches auf einen am Gehäuse der Vermittlungsanlage (VA) oder eines Endgerätes (EG) angebrachten drahtlosen Empfänger gerichtet wird, wobei die vermittlungstechnischen Daten nach dem Ausführen einer systemunabhängigen einheitlichen Eingabeprozedur vom Fernbedienungsgerät (FB) aus in die Vermittlungsanlage (VA) oder das Endgerät (EG) gelangen, wo sie so umgeformt werden, daß die Daten systemgerecht in dafür vorgesehenen Speichern (HSP) aufgenommen werden können, so daß die gewünschten Merkmale wirksam werden, dadurch gekennzeichnet daß das Fernbedienungsgerät (FB) neben einer Wähltastatur (WT) und Funktionstasten (FT) für Einzeleingaben auch eine Lesevorrichtung für die Aufnahme eines Eingabespeichermediums (ESP) enthält, womit größere Datenmengen drahtlos eingebbar sind, daß das Fernbedienungsgerät (FB) einen Empfänger (FBE) enthält und in der Vermittlungsanlage (VA), bzw. dem Endgerät (EG) ein Sender (S) angeordnet ist, womit Signale zum Fernbedienungsgerät (FB) übertragen werden, die auf einer Anzeigeeinrichtung (AE) darstellbar sind, wo auch ein von der Vermittlungsanlage (VA) oder dem Endgerät (EG) ausgesendetes Quittungssignal angezeigt wird, wenn die einzugebenden Daten ordnungsgemäß empfangen worden sind,
und daß auf der Anzeigeeinrichtung (AE) des Fernbedienungsgerätes (FB) aus der Vermittlungsanlage (VA) oder aus dem Engerät (EG) abrufbare Daten darstellbar sind.

2. Verfahren nach Anspruch 1,
dadurch gekennzeichnet,
daß mit der Wähltastatur (WT) einzelne Anschlußorgane (A01) der Vermittlungsanlage (VA) gekennzeichnet werden, für welche nachfolgend eingegebene Merkmale aktiviert oder gelöscht werden sollen, wobei die mit Merkmale kennzeichnenden Piktogrammen ausgestatteten Funktionstasten (FT) betätigt werden, welche die gleichen Symbole aufweisen, wie sie an Kommunikations-Endgeräten (z. B. FE) angebracht sind.

3. Verfahren nach Anspruch 1,
dadurch gekennzeichnet,
daß mit der Wähltastatur (WT) eine der jeweiligen Vermittlungsanlagen (VA) oder dem Endgerät (EG) zugeordnete geheime Codezahlen eingegeben werden muß, bevor vermittlungstechnische Daten übertragen werden können.

4. Verfahren nach Anspruch 3,
dadurch gekennzeichnet,
daß die geheime Codezahl auf dem für eine Vermittlungsanlage (VA) oder ein Endgerät (EG) erstellten Eingabe-Speichermedium (ESP) aufgebracht ist.

5. Verfahren nach Anspruch 1,
dadurch gekennzeichnet,
daß als Eingabe-Speichermedium eine Bandkassette (BK), eine Magnetkarte (MK) oder ein programmierbarer Festwertspeicher (PROM) verwendbar ist.

6. Verfahren nach Anspruch 1,
dadurch gekennzeichnet,
daß der Empfänger (E) für die in eine Vermittlungsanlage (VA) einzugebenden Daten an einem Endgerät (EG1, VP) angebracht ist, von wo aus eine direkte Verbindung zu der Vermittlungsanlage (VA) besteht, oder direkt aufbaubar ist.

7. Verfahren nach Anspruch 1,
dadurch gekennzeichnet,
daß für die aus der Vermittlungsanlage (VA) oder dem Endgerät (EG) abrufbaren Daten eine besondere einheitliche Bedienungsprozedur erforderlich ist, worin auch die Eingabe eines Geheimcodes enthalten ist, bevor diese auf der Anzeigeeinrichtung (AE) dargestellt und/oder auf ein Ausgabe-Speichermedium (ASP) gebracht werden können, wofür im Fernbedienungsgerät (FB) eine Schreibeinrichtung vorgesehen ist.

8. Verfahren nach Anspruch 1,
dadurch gekennzeichnet,
daß an das Fernbedienungsgerät (FB) durch einen Anschluß (AP) ein Personalcomputer (PC) angeschlossen werden kann.

## Claims

1. Method for entering switching-related customer and operational data into communication exchanges (VA) and/or programmable communication terminals (EG) which are controlled by stored programmes, it being the case that for the purpose of commissioning, and of activating functional features and of setting up authorizations special memories (HSP) are provided which accept the data required therefore, and that for the purpose of entering the data required for operating a communication exchange (VA) or a communication terminal (EG) use is made of a remote control device (FB) which is of standard design and is directed towards a wireless receiver fitted on the housing of the exchange (VA) or of a terminal (EG), the switching-related data passing out, after execution of a system-independent, standardized entry procedure, from the remote control device (FB) into the exchange (VA) or the terminal (EG) where they are transformed in such a way that the data can be accepted in a fashion tailored to the system in memories (HSP) provided for the purpose so that the desired features become active, characterized in that in addition to a dialling keyboard (WT) and function key (FT) by individual entries, the remote control device (FB) also contains a reading device for receiving an entry storage medium (ESP) by means of which relatively large datasets can be entered in wireless fashion, in that the remote control device (FB) contains a receiver (FBE) and there is arranged in the exchange (VA) or the terminal (EG) a transmitter (S) which transmits to the remote control device (FB) signals which can be represented on a display device (AE) where an acknowledgement signal output by the exchange (VA) or the terminal (EG) is displayed when the data to be entered have been properly received, and in that data which can be called up from the exchange (VA) or from the terminal (EG) can be represented on the display device (AE) on the remote control (FB).

2. Method according to Claim 1, characterized in that the dialling keyboard (WT) is used to designate individual access units (A01) of the exchange (VA) for which entered features are subsequently to be activated or cleared, those function keys (FT), provided with pictograms characterizing features, being activated which have the same symbols as are provided on communication terminals (for example, FE).

3. Method according to Claim 1, characterized in that the dialling keyboard (WT) must be used to enter a secret code number assigned to the respective exchange (VA) or the terminal (EG) before switching-related data can be transmitted.

4. Method according to Claim 3, characterized in that the secret code number is applied to the entry/storage medium (ESP) created for an exchange (VA) or a terminal (EG).

5. Method according to Claim 1, characterized in that a tape cassette (BK), a magnetic card (MK) or a programmable read-only memory (PROM) can be used as entry/storage medium.

6. Method according to Claim 1, characterized in that the receiver (E) for the data to be entered into an exchange (VA) is mounted on a terminal (EG1, VP), from which a direct connection to the exchange (VA) exists or can be immediately established.

7. Method according to Claim 1, characterized in that the data which can be called up from the exchange (VA) or the terminal (EG) require a special, standardized operating procedure, which also contains the entry of a secret code, before these data can be represented on the display device (AE) and/or can be brought onto an output/storage medium (ASP), for which purpose a writing device is provided in the remote control device (FB).

8. Method according to Claim 1, characterized in that a personal computer (PC) can be connected to the remote control device (FB) by means of a connection (AP).

## Revendications

1. Procédé pour l'introduction de données techniques de commutation relatives à l'exploitation et aux abonnés dans des centraux de commutation (VA) et/ou des terminaux de communication, programmables (EG), commandée par des programmes en mémoire, des mémoires particulières (HSP) étant prévues pour la mise en route ainsi que pour l'activation de caractéristiques de fonction et pour l'installation de modifications, ces mémoires recevant les données nécessaires, et pour introduire les données nécessaires à l'exploitation d'un central de commutation (VA) ou d'un terminal de communication (EG) utilisant un appareil de télécommande (FB) uniforme, que l'on dirige pour une liaison sans fil vers un récepteur équipant le boîtier du central (VA) ou d'un terminal (EG), les données techniques de commutation arrivant après l'exécution d'une procédure d'introduction uniforme indépendante du système, par l'appareil de télécommande (FB), dans le central de commutation (VA) ou le terminal de transmission (EG) qui les convertissent pour que les données, conformes au système, puissent être enregistrées dans les mémoires (HSP) prévues à cet effet, pour activer les caractéristiques souhaitées, caractérisé en ce que l'appareil de télécommande (FB) comprend, en plus d'un clavier de sélection (WT) et des touches de fonction (FT) pour les différentes entrées, également un dispositif de lecture pour recevoir un support de mémoire d'entrée (ESP) permettant d'introduire des quantités importantes de données par une transmission sans fil, l'appareil de télécommande (FB) comportant un récepteur (FBE) et le central (VA) ou le terminal (EG), un émetteur (S) pour transmettre des signaux vers l'appareil de télécommande (FB), signaux qui peuvent apparaître sur le dispositif d'affichage (AE) qui affiche également un signal d'acquittement émis par le central (VA) ou le terminal (EG) lorsqu'ils ont reçu correctement les données à introduire, et le dispositif d'affichage (AE) de l'appareil de télécommande (FB) peut afficher les données appelées dans le central (VA) ou le terminal (EG).

2. Procédé selon la revendication 1, caractérisé en ce que, le clavier de sélection (WT) permet de caractériser différents organes de raccordement (AO1) du central (VA), et pour activer ou effacer les caractéristiques introduites, on actionne les touches de fonction (FT) équipées de pictogrammes correspondant aux caractéristiques, ces touches ayant les mêmes symboles que ceux déterminant par exemple un terminal (FE) de communication.

3. Procédé selon la revendication 1, caractérisé en ce que, le clavier de sélection (WT) introduit un code chiffré, secret, associé au central (VA) ou au terminal (EG) avant de pouvoir transmettre les données techniques de communication.

4. Procédé selon la revendication 3, caractérisé en ce que, le code secret est appliqué à un support de mémoire d'entrée (ESP) établi pour un central (VA) ou un terminal (EG).

5. Procédé selon la revendication 1, caractérisé en ce que, comme support de mémoire d'entrée on utilise une cassette à bande (BK), une carte magnétique (MK) ou une mémoire fixe programmable (PROM).

6. Procédé selon la revendication 1, caractérisé en ce que, le récepteur (E) des données à introduire dans le central (VA) est prévu dans un terminal (EG1, VP) qui a une liaison directe avec le central (VA) ou liaison qui s'établit directement.

7. Procédé selon la revendication 1, caractérisé en ce que, les données appelées pour le central (VA) ou le terminal (EG) nécessitent une procédure d'exploitation uniforme particulière comprenant également l'introduction d'un code secret avant que celui-ci ne soit affiché par le dispositif d'affichage (AE) et/ou ne puisse être appliqué à un support de mémoire ou de sortie (ASP), et un dispositif d'enregistrement est prévu à cet effet dans l'appareil de télécommande (FB).

8. Procédé selon la revendication 1, caractérisé en ce que, un ordinateur personnel (PC) peut être relié par un branchement (AP) à l'appareil de télécommande (FB).
